# EUROPEAN PATENT APPLICATION

(11) **EP 3 396 922 A1**
(43) Date of publication of application: **31.10.2018**
(21) Application number: 18156554.0
(22) Date of filing: 13.02.2018
(51) Int. Cl.: H04L 29/06, H04W 12/10, H04W 4/44, H04W 4/48, G07C 5/00, G07C 5/08, H04L 29/08

(54) **INFORMATION PROCESSING APPARATUS, INFORMATION PROCESSING SYSTEM AND INFORMATION PROCESSING METHOD**

(30) Priority: 25.04.2017 JP 2017086057; 22.11.2017 JP 2017224876
(71) Applicant: KABUSHIKI KAISHA TOSHIBA, Minato-ku Tokyo 105-8001 (JP)
(72) Inventor: YONEMURA, Tomoko, Tokyo, 105-8001 (JP); WADA, Hiroho, Tokyo, 105-8001 (JP)
(74) Representative: Moreland, David

(57) **Abstract**

According to an embodiment, an information processing apparatus includes a storage controller(32G;36G). The storage controller (32G; 36G) is configured to store, in a storage, communication data of nodes connected via a network and authentication information that is used for authentication between the nodes in communication of the communication data so that the communication data and the authentication information are associated with each other.

## Description

### FIELD

The present disclosure relates to an information processing apparatus, an information processing system, and an information processing method.

### BACKGROUND

Systems in which a plurality of nodes are connected to a network and communication between these nodes is made through a gateway device (GW) have been known. For example, a configuration in which such a system is mounted on a vehicle has been disclosed. Furthermore, pieces of log data related to a driving environment monitoring result, communication inside and outside the vehicle, operations by a driver, a vehicle internal system state, and the like are used for analysis of a vehicle traveling state.

For example, a system that stores, in the vehicle, vehicle information in a period in accordance with a detection time point of vehicle behavior and transmits it to a server has been disclosed. In the analysis of the log data, a causal relation of communication data between the nodes mounted on the vehicle and in each node needs to be estimated in some cases. Conventionally, information capable of estimating the causal relation of each piece of communication data contained in the log data between the nodes and in each node has not been provided. That is to say, it has been conventionally difficult to provide data useful for the log analysis.

### BRIEF DESCRIPTION OF THE DRAWINGS

FIG. 1 is a schematic plan view illustrating outline of an information processing system;
FIG. 2 is a block diagram illustrating an example of the hardware configuration of a GW;
FIG. 3 is a block diagram illustrating an example of the hardware configuration of a node;
FIG. 4 is a block diagram illustrating an example of the functional configuration of the GW and the node;
FIG. 5 is a schematic plan view illustrating an example of a data structure of a log database (DB);
FIGS. 6A and 6B are schematic plan views illustrating an example of a data structure of a log DB;
FIG. 7 is a flowchart illustrating an example of procedures of information processing that the GW executes;
FIG. 8 is a flowchart illustrating an example of procedures of information processing that the node executes;
FIG. 9 is a block diagram illustrating an example of the functional configurations of a GW and a node;
FIG. 10 is a schematic plan view illustrating an example of a data structure of a log DB;
FIG. 11 is a flowchart illustrating an example of procedures of information processing that the GW executes; and
FIG. 12 is a flowchart illustrating an example of procedures of information processing that the node executes.

### DETAILED DESCRIPTION

According to an embodiment, an information processing apparatus includes a storage controller. The storage controller is configured to store, in a storage, communication data of nodes connected via a network and authentication information that is used for authentication between the nodes in communication of the communication data so that the communication data and the authentication information are associated with each other.

An information processing system according to an arrangement can be applied to, for example, an in-vehicle network system (communication system) that is mounted on an automobile as an example of a moving body. The following describes an example in which an in-vehicle gateway device (GW) included in the in-vehicle network system is configured as an information processing apparatus according to an arrangement. Furthermore, the following describes an example in which electronic control units (ECUs), various sensors, and apparatuses included in the in-vehicle network system are configured as nodes according to an arrangement.

It should be noted that apparatuses and systems to which the information processing system in the arrangement can be applied are not limited to the following examples. The information processing system in the arrangement can be widely applied to various systems that communicate communication data to be analyzed.

### First Arrangement

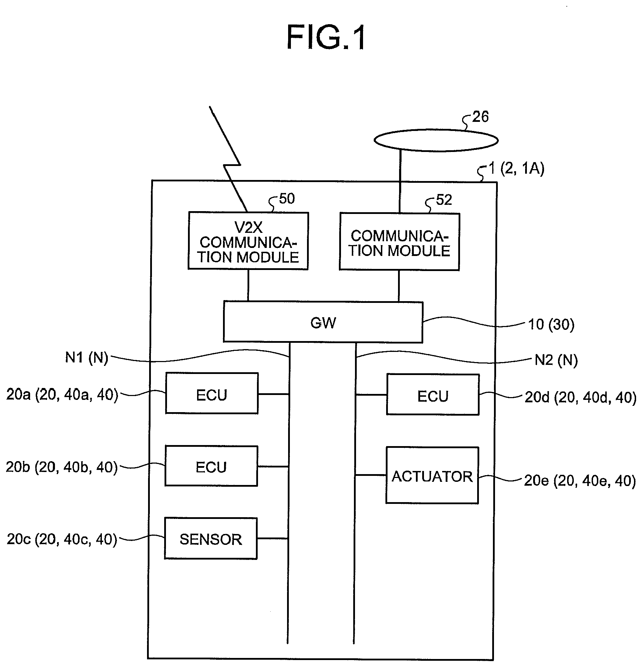

FIG. 1 is a schematic plan view illustrating outline of an information processing system 1. The information processing system 1 is mounted on, for example, a vehicle 2.

The information processing system 1 includes a GW 10 and a plurality of nodes 20. The nodes 20 and the GW 10 are connected via a network N. In the example illustrated in FIG. 1, the information processing system 1 includes a plurality of sub networks (sub network N1 and sub network N2) as the network N. The nodes 20 are connected to the respective sub networks. Furthermore, these sub networks are connected to the GW 10.

A V2X communication module 50 and a communication module 52 are connected to the GW 10. The communication module 52 is a module for making communication with an external apparatus via an external network 26. The V2X communication module 50 is a module for making direct wireless communication with another vehicle 2 without using communication infrastructure. For example, a vehicle-to-everything (V2X) communication is used for the direct wireless communication. It should be noted that the V2X communication is also referred to as a car-to-X (C2X) communication in some cases.

The GW 10 is an example of the information processing apparatus. The GW 10 executes pieces of processing, which will be described later, in addition to original functions as the gateway. Examples of the original functions as the gateway include relay and filtering of communication between the sub networks (for example, the sub network N1 and the sub network N2) in the information processing system 1, relay and filtering of communication between the information processing system 1 and the external network 26 at the outside of the vehicle, and relay and filtering of the direct communication with the other vehicle 2.

The nodes 20 are an example of a node. The nodes 20 are electronic apparatuses communicating communication data with another node 20 through the GW 10. The nodes 20 are, for example, ECUs, various sensors, and actuators. The ECU is an electronic apparatus performing various controls in the vehicle 2. FIG. 1 illustrates an ECU 20a, an ECU 20b, a sensor 20c, an ECU 20d, and an actuator 20e, as examples of the nodes 20. The nodes 20 execute respective pieces of processing, which will be described later, in addition to original functions as the electronic apparatuses.

A communication standard of the information processing system 1 is not limited. The communication standard of the information processing system 1 is, for example, the controller area network (CAN) and FlexRay (registered trademark).

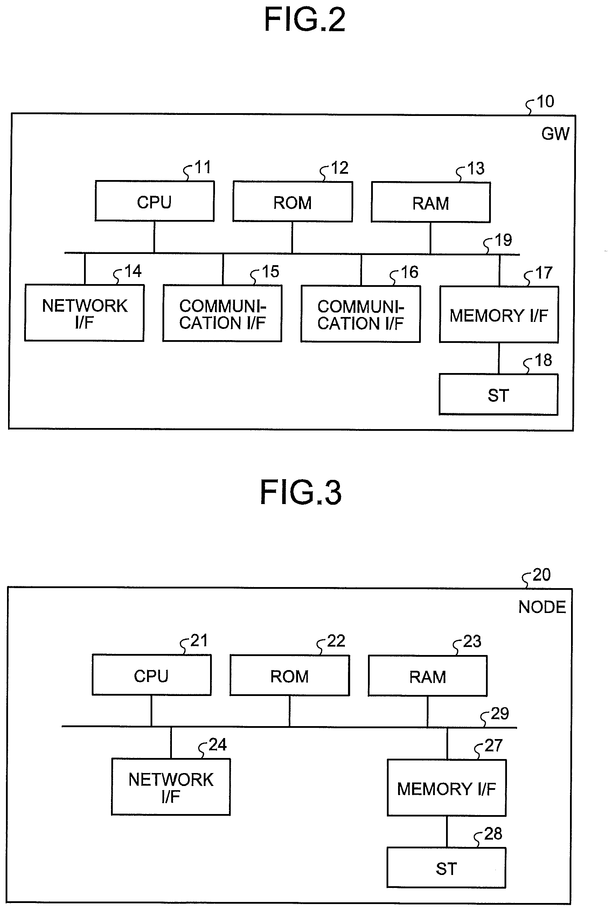

FIG. 2 is a block diagram illustrating an example of the hardware configuration of the GW 10. The GW 10 is configured by connecting a control device such as a central processing unit (CPU) 11, storage devices such as a read only memory (ROM) 12 and a random access memory (RAM) 13, a network interface (I/F) 14, a communication I/F 15, a communication I/F 16, and a memory I/F 17 via a bus 19.

The network I/F 14 is a communication interface for making communication with the nodes 20 via the sub networks. The communication I/F 15 is a communication interface for making direct wireless communication. The communication I/F 16 is a communication interface for making communication with the external apparatus via the external network 26. The memory I/F 17 is an interface for accessing a storage (ST) 18. The ST 18 is a memory storing therein various pieces of information. The ST 18 is, for example, a hard disk or a solid state drive (SSD) using a non-volatile memory.

In the GW 10, the CPU 11 reads out a computer program onto the RAM 13 from the ROM 12 and executes it, so that various functions, which will be described later, are implemented.

FIG. 3 is a block diagram illustrating an example of the hardware configuration of each node 20. The node 20 is configured by connecting a control device such as a CPU 21, storage devices such as a ROM 22 and a RAM 23, a network I/F 24, and a memory I/F 27 via a bus 29.

The network I/F 24 is a communication interface for making communication with another node 20 via the sub network and the GW 10. The memory I/F 27 is an interface for accessing a ST 28. The ST 28 is a memory storing therein various pieces of information.

In the node 20, the CPU 21 reads out a computer program onto the RAM 23 from the ROM 22 and executes it, so that various functions, which will be described later, are implemented.

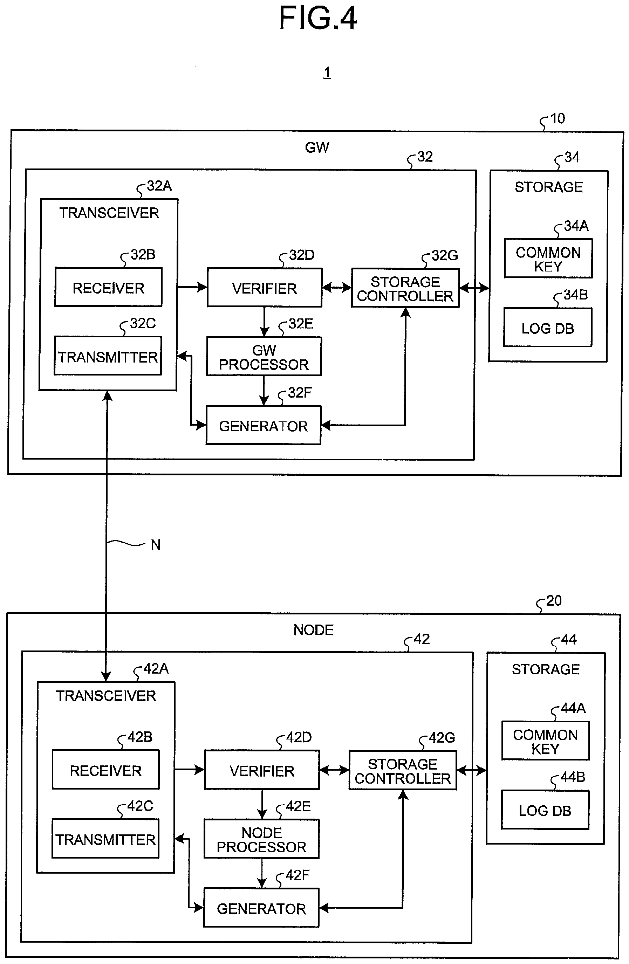

FIG. 4 is a block diagram illustrating an example of the functional configuration of each of the GW 10 and the nodes 20 included in the information processing system 1 in the first arrangement. It should be noted that FIG. 4 illustrates one node 20 for simplifying explanation. In practice, the nodes 20 make communication through the GW 10 and execute the pieces of processing, which will be described later.

### GW 10

First, the GW 10 is described. The GW 10 includes a controller 32 and a storage 34. The controller 32 and the storage 34 are connected to each other so as to transmit and receive pieces of data and signals.

The storage 34 stores therein various pieces of information. The storage 34 is an example of a storage and a first storage. The storage 34 is implemented by, for example, the ST 18 (see FIG. 2). In the first arrangement, the storage 34 stores therein a common key 34A and a log database (DB) 34B (which will be described in detail later).

The controller 32 is configured by incorporating a computer system as an integrated circuit and executes various controls in accordance with a computer program (software) operating on the computer system. The controller 32 includes a transceiver 32A, a verifier 32D, a GW processor 32E, a generator 32F, and a storage controller 32G. The transceiver 32A includes a receiver 32B and a transmitter 32C.

These respective units (the transceiver 32A, the receiver 32B, the transmitter 32C, the verifier 32D, the GW processor 32E, the generator 32F, and the storage controller 32G) are implemented by, for example, one or a plurality of processors. Each of the above-mentioned units may be implemented by, for example, causing the processor such as the CPU 11 to execute a computer program, that is, by software. Each of the above-mentioned units may be implemented by the processor such as an exclusive integrated circuit (IC), that is, hardware. Each of the above-mentioned units may be implemented by the software and the hardware in combination. When the processors are used, each processor may implement one of the respective units or equal to or more than two of the respective units.

The transceiver 32A transmits and receives various pieces of data to and from the nodes 20, another information processing system 1, the external apparatus, and the like. In the first arrangement, the transceiver 32A transmits and receives pieces of communication data to and from the nodes 20. The transceiver 32A includes the receiver 32B and the transmitter 32C. The receiver 32B receives the communication data from the node 20. The transmitter 32C transmits the received communication data to the node 20 as a transmission destination of the communication data.

When the nodes 20 transmit and receive the pieces of communication data through the GW 10, validity of communication needs to be guaranteed so as to prevent erroneous control. Each of the nodes 20 therefore adds authentication information to the communication data for transmission. To be specific, each of the nodes 20 transmits the communication data, the authentication information, and transmission destination information indicating the transmission destination of the communication data to the GW 10. The transmission destination information is identification information of another node 20 as the transmission destination.

The authentication information is information that is used for authentication between the nodes 20. It is sufficient that the authentication information is information for guaranteeing the validity of communication. The authentication information is, for example, a message authentication code (MAC), a random number, a counter value, or a digital signature.

The node 20 generates the authentication information. The types of the pieces of authentication information that are used in the information processing system 1 are assumed to be the same in the GW 10 and the nodes 20 included in the information processing system 1.

In the first arrangement, the receiver 32B of the GW 10 therefore receives the communication data, the authentication information, and the transmission destination information from the node 20. The transmitter 32C transmits the communication data, the authentication information, and the transmission destination information to the node 20.

The communication data that the GW 10 receives from the node 20 is not data to be transmitted to another node 20 in some cases. For example, the GW 10 receives, as the communication data, information indicating a processing result in the node 20 in some cases. In this case, the receiver 32B does not receive the transmission destination information (that is, receives the communication data and the authentication information) from the node 20.

The verifier 32D verifies the authentication information.

When the authentication information is the MAC, the verifier 32D acquires the common key 34A from the storage 34 through the storage controller 32G. It is sufficient that the common key 34A is previously stored in the storage 34. It should be noted that the storage 34 may previously store therein one common key 34 common to all of the nodes 20 included in the information processing system 1, previously store therein the common keys 34 common to the respective sub networks, or previously store therein the common keys 34A corresponding to the respective nodes 20.

The verifier 32D calculates the MAC using the communication data received by the receiver 32B and the common key 34A. The verifier 32D compares the calculated MAC and the MAC received together with the communication data. When they are identical to each other, the verifier 32D determines that verification is normal (successful) whereas when they are not identical to each other, it determines that verification is abnormal (unsuccessful). Thereafter, the verifier 32D outputs a verification result indicating the verification normality or verification abnormality to the storage controller 32G and the GW processor 32E.

When the authentication information is the random number, it is sufficient that the GW 10 includes a pseudo random number generator. The verifier 32D reads a random number value (random number value before update) from the storage 34. The verifier 32D inputs the read random number value to the pseudo random number generator and updates the random number value. The verifier 32D stores, in the storage 34, the random number value after update as the random number value before update. Furthermore, the verifier 32D compares the random number value after update and the random number value received together with the communication data by the receiver 32B with each other. When they are identical to each other, the verifier 32D determines that verification is normal whereas when they are not identical to each other, it determines that verification is abnormal. Thereafter, the verifier 32D outputs a verification result indicating the verification normality or verification abnormality to the storage controller 32G and the GW processor 32E.

When the authentication information is the counter value, it is sufficient that the GW 10 includes a counter generating the counter value. The verifier 32D reads the counter value (counter value before update) from the storage 34. The verifier 32D inputs the read counter value to the counter and updates the counter value. The verifier 32D stores, in the storage 34, the counter value after update as the counter value before update. Furthermore, the verifier 32D compares the counter value after update and the counter value received together with the communication data by the receiver 32B with each other. When they are identical to each other, the verifier 32D determines verification normality whereas when they are not identical to each other, it determines verification abnormality. Thereafter, the verifier 32D outputs a verification result indicating the verification normality or verification abnormality to the storage controller 32G and the GW processor 32E.

When the authentication information is the digital signature, the verifier 32D determines whether the communication data is valid using a well-known public key encryption system and hash function. The verifier 32D determines verification normality when it determines that the communication data is valid. The verifier 32D determines verification abnormality when it determines that the communication data is invalid. Thereafter, the verifier 32D outputs a verification result indicating the verification normality or verification abnormality to the storage controller 32G and the GW processor 32E.

It should be noted that the verifier 32D may store information used for the verification in the storage 34 at the time of termination. The verifier 32 may read the information that is used for the verification from the storage 34 at the time of activation and use it for the verification of the authentication information. The information that is used for the verification is at least one of the random number value, the counter value, the hash function, and a public key certificate.

The activation time is the time when supply of electric power to the respective devices of the GW 10 is started. The activation time is, for example, the time when an accessory power supply of the vehicle 2 is turned ON or the time when an ignition power supply of the vehicle 2 is turned ON.

The termination time is the time when the supply of the electric power to the respective devices of the GW 10 is instructed to be turned OFF. The termination time is, for example, the time when the ignition power supply is instructed to be turned OFF by a user operation on an ignition switch of the vehicle 2, or the like, or the time when the accessory power supply is instructed to be turned OFF.

In this case, the ST 18 that is used as the storage 34 is preferably a non-volatile memory. For example, it is sufficient that the storage 34 is configured by a plurality of types of non-volatile memories.

Next, the storage controller 32G is described. The storage controller 32G controls storage of data in the storage 34 and read-out of the data therefrom. The storage controller 32G is an example of a storage controller and a first storage controller.

The storage controller 32G stores, in the storage 34, the communication data of the nodes 20 connected via the network N and related information in a correspondence manner.

The related information is information related to input and output of the communication data in the nodes 20. The information related to the input and output is information indicating a causal relation of the communication data. The information indicating the causal relation is, in other words, information capable of specifying the node 20 as a transmission source of the communication data and the node 20 as a transmission destination of the communication data.

The related information is, for example, identification information of the communication data. That is to say, the related information is information capable of uniquely identifying the communication data. In the first arrangement, the authentication information is used as the identification information as an example of the related information. That is to say, in the first arrangement, the identification information is the authentication information that is used for authentication between the nodes 20.

As mentioned above, the authentication information is, for example, the MAC, the random number, the counter value, or the digital signature. In the first arrangement, the storage controller 32G stores, in the storage 34, the communication data and the authentication information received together with the communication data in the correspondence manner.

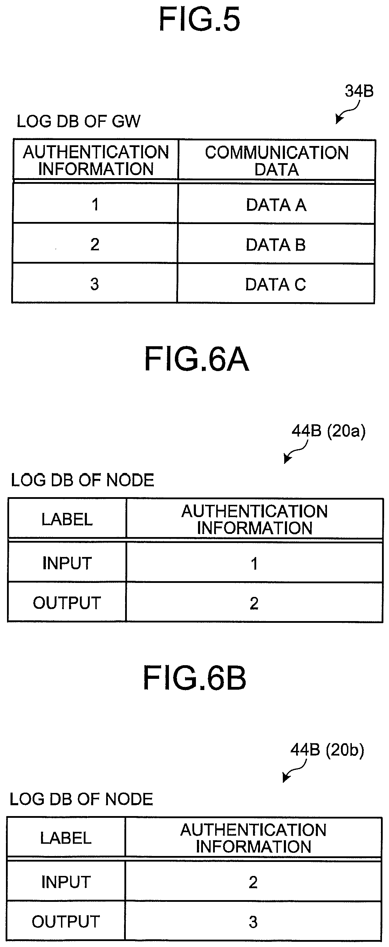

To be specific, the storage controller 32G stores, in the storage 34, the communication data and the authentication information in the correspondence manner by updating the log DB 34B. FIG. 5 is a schematic plan view illustrating an example of a data structure of the log DB 34B. The log DB 34B is a database in which the pieces of authentication information and the pieces of communication data are made to correspond to each other. It should be noted that the data structure of the log DB 34B is not limited to the database. The data structure of the log DB 34B may be a table or the like.

Explanation is continued with reference to FIG. 4 again. When the verification result received from the verifier 32D indicates the verification normality, the storage controller 32G may store, in the storage 34, the communication data and the authentication information used for the verification in a correspondence manner. When the verification result indicates the verification abnormality, the storage controller 32G may omit storage, in the storage 34, of the communication data and the authentication information used for the verification.

It should be noted that the storage controller 32G preferably stores, in the storage 34, address information indicating a region in which the communication data and the authentication information are subsequently stored at the time of termination. For example, the storage controller 32G preferably stores, in the storage 34, the address information indicating the region in which the communication data and the authentication information are subsequently stored in the log DB 34B stored in the storage 34 at the time of activation.

It is sufficient that the storage controller 32G reads the address information from the storage 34 at the time of activation and stores the communication data and the authentication information in the region indicated by the address information in the storage 34.

It should be noted that definition of the termination time and the activation time is the same as the above-mentioned definition. Also in this case, the ST 18 that is used as the storage 34 is preferably the non-volatile memory. For example, it is sufficient that the storage 34 is configured by a plurality of types of non-volatile memories.

The GW processor 32E executes the original functions as the GW. To be specific, the GW processor 32E performs the relay and filtering of the communication between the sub networks (for example, the sub network N1 and the sub network N2) in the information processing system 1, the relay and filtering of the communication between the information processing system 1 and the external network 26 at the outside of the vehicle, and the relay and filtering of the direct communication with the other vehicle 2.

In the first arrangement, the GW processor 32E executes the original functions as the GW 10 when the verifier 32D determines the verification normality. As mentioned above, examples of the original functions as the GW 10 include the relay of the communication between the sub networks (for example, the sub network N1 and the sub network N2) in the information processing system 1, the relay of the communication between the information processing system 1 and the external network 26 at the outside of the vehicle, and the relay of the direct communication with the other vehicle 2.

The generator 32F generates authentication information that is added to the communication data to be transmitted to the node 20. The generator 32F generates, for example, the authentication information when domains (sub networks) of the node 20 as the transmission source of the communication data received by the receiver 32B and the node 20 as the transmission destination of the communication data are different from each other. Furthermore, when the authentication information is the MAC and the node 20 as the transmission source and the node 20 as the transmission destination use the different common keys 34A, the generator 32F generates the authentication information.

When the authentication information is, for example, the MAC, the generator 32F acquires the common key 34A from the storage 34 through the storage controller 32G. Then, the generator 32F calculates the MAC using the communication data to be transmitted to the node 20 and the common key 34A. The generator 32F thereby generates the MAC as the authentication information.

When the authentication information is the random number, it is sufficient that the GW 10 includes the pseudo random number generator. The generator 32F reads the random number value (random number value before update) from the storage 34. The generator 32F inputs the read random number value to the pseudo random number generator and updates the random number value. The generator 32F stores, in the storage 34, the random number value after update as the random number value before update. Furthermore, the generator 32F generates the random number value after update as the authentication information.

When the authentication information is the counter value, it is sufficient that the GW 10 includes the counter generating the counter value. The generator 32F reads the counter value (counter value before update) from the storage 34. The generator 32F inputs the read counter value to the counter and updates the counter value. The generator 32F stores, in the storage 34, the counter value after update as the counter value before update. Furthermore, the generator 32F generates the counter value after update as the authentication information.

When the authentication information is the digital signature, the generator 32F generates the digital signature using the well-known public key encryption system and hash function. The generator 32F thereby generates the digital signature as the authentication information.

When the GW 10 transmits the communication data and the authentication information received by the receiver 32B to the node 20 as the transmission destination of the communication data as they are, the generator 32F may omit generation of the authentication information.

The transmitter 32C transmits the communication data, the authentication information for the communication data, and the transmission destination information to the node 20 that is identified by the transmission destination information.

The storage controller 32G stores, in the storage 34, the communication data transmitted to the node 20 from the transmitter 32C and the authentication information added to the communication data in the correspondence manner. That is to say, the storage controller 32G registers, in the log DB 34B, the communication data and the authentication information in the correspondence manner.

### Node 20

Next, the nodes 20 are described. Each node 20 includes a controller 42 and a storage 44. The controller 42 and the storage 44 are connected to each other so as to transmit and receive pieces of data and signals.

The storage 44 stores therein various pieces of information. The storage 44 is an example of a second storage. The storage 44 is implemented by, for example, the ST 28 (see FIG. 3). In the first arrangement, the storage 44 stores therein a common key 44A and a log DB 44B (as will be described in detail).

The controller 42 is configured by incorporating a computer system as an integrated circuit and executes various controls in accordance with a computer program (software) operating on the computer system. The controller 42 includes a transceiver 42A, a verifier 42D, a node processor 42E, a generator 42F, and a storage controller 42G. The transceiver 42A includes a receiver 42B and a transmitter 42C.

These respective units (the transceiver 42A, the receiver 42B, the transmitter 42C, the verifier 42D, the node processor 42E, the generator 42F, and the storage controller 42G) are implemented by, for example, one or a plurality of processors. Each of the above-mentioned units may be implemented by, for example, causing the processor such as the CPU 21 to execute a computer program, that is, by software. Each of the above-mentioned units may be implemented by the processor such as an exclusive IC, that is, hardware. Each of the above-mentioned units may be implemented by the software and the hardware in combination. When the processors are used, each processor may implement one of the respective units or equal to or more than two of the respective units.

The transceiver 42A transmits and receives various pieces of data to and from the GW 10. In the first arrangement, the transceiver 42A transmits and receives the communication data to and from another node 20 through the GW 10. The receiver 42B receives the communication data from the GW 10. As mentioned above, in the first arrangement, the receiver 42B receives the communication data, the authentication information, and the transmission destination information from the GW 10. The transmitter 42C transmits the communication data to the GW 10. As mentioned above, in the first arrangement, the transmitter 42C transmits the communication data, the authentication information, and the transmission destination information to the GW 10.

The verifier 42D verifies the authentication information.

When the authentication information is the MAC, the verifier 42D acquires a common key 44A from the storage 44 through the storage controller 42G. It is sufficient that the common key 44A is previously stored in the storage 44. The common key 44A is similar to the common key 34A. That is to say, when one common key common to all of the nodes 20 included in the information processing system 1 is provided, the common key 34A and the common key 44A are the same key.

The verifier 42D calculates the MAC using the communication data received by the receiver 42B and the common key 44A. The verifier 42D compares the calculated MAC and the MAC received together with the communication data. When they are identical to each other, the verifier 42D determines that verification is normal (successful) whereas when they are not identical to each other, it determines that verification is abnormal (unsuccessful). Thereafter, the verifier 42D outputs a verification result indicating the verification normality or verification abnormality to the storage controller 42G and the node processor 42E.

When the authentication information is the random number, it is sufficient that the node 20 includes a pseudo random number generator. The node 20 reads a random number value (random number value before update) from the storage 44. The verifier 42D inputs the read random number value to the pseudo random number generator and updates the random number value. The verifier 42D stores, in the storage 44, the random number value after update as the random number value before update. Furthermore, the verifier 42D compares the random number value after update and the random number value received together with the communication data by the receiver 42B with each other. When they are identical to each other, the verifier 42D determines that verification is normal whereas when they are not identical to each other, it determines that verification is abnormal. Thereafter, the verifier 42D outputs a verification result indicating the verification normality or verification abnormality to the storage controller 42G and the node processor 42E.

When the authentication information is the counter value, it is sufficient that the node 20 includes a counter generating the counter value. The verifier 42D reads the counter value (counter value before update) from the storage 44. The verifier 42D inputs the read counter value to the counter and updates the counter value. The verifier 42D stores, in the storage 44, the counter value after update as the counter value before update. Furthermore, the verifier 42D compares the counter value after update and the counter value received together with the communication data by the receiver 42B with each other. When they are identical to each other, the verifier 42D determines that verification is normal whereas when they are not identical to each other, it determines that verification is abnormal. Thereafter, the verifier 42D outputs a verification result indicating the verification normality or verification abnormality to the storage controller 42G and the node processor 42E.

When the authentication information is the digital signature, the verifier 42D determines whether the communication data is valid using the well-known public key encryption system and hash function. The verifier 42D determines that verification is normal when it determines that the communication data is valid. The verifier 42D determines that verification is abnormal when it determines that the communication data is invalid. Thereafter, the verifier 42D outputs a verification result indicating the verification normality or verification abnormality to the storage controller 42G and the node processor 42E.

The node processor 42E executes original functions as the node 20. To be specific, the node 20 performs predetermined processing. The predetermined processing is, for example, detection of a predetermined target, driving of a predetermined target, and various pieces of arithmetic processing.

In the first arrangement, the node processor 42E executes the original functions as the node 20 when the verification result received from the verifier 42D indicates the verification normality. The node processor 42E does not execute the original functions as the node 20 when the verification result received from the verifier 42D indicates the verification abnormality.

The generator 42F generates the authentication information that is added to the communication data to be transmitted to the GW 10. When the communication data as a transmission target to be transmitted to the GW 10 or another node 20 through the GW 10 is generated in the processing by the node processor 42E, for example, the generator 42F generates the authentication information of the communication data.

When the authentication information is, for example, the MAC, the generator 42F acquires the common key 44A from the storage 44 through the storage controller 42G. Then, the generator 42F calculates the MAC using the communication data to be transmitted and the common key 44A. The generator 42F thereby generates the MAC as the authentication information.

When the authentication information is the random number, it is sufficient that the node 20 includes the pseudo random number generator. The generator 42F reads the random number value (random number value before update) from the storage 44. The generator 42F inputs the read random number value to the pseudo random number generator and updates the random number value. The generator 42F stores, in the storage 44, the random number value after update as the random number value before update. Furthermore, the generator 42F generates the random number value after update as the authentication information.

When the authentication information is the counter value, it is sufficient that the node 20 includes the counter generating the counter value. The generator 42F reads the counter value (counter value before update) from the storage 44. The generator 42F inputs the read counter value to the counter and updates the counter value. The generator 42F stores, in the storage 44, the counter value after update as the counter value before update. Furthermore, the generator 42F generates the counter value after update as the authentication information.

When the authentication information is the digital signature, the generator 42F generates the digital signature using the well-known public key encryption system and hash function. The generator 42F thereby generates the digital signature as the authentication information.

The transmitter 42C transmits the communication data, the authentication information for the communication data, and the transmission destination information of the communication data to the GW 10.

Next, the storage controller 42G is described. The storage controller 42G is an example of a second storage controller. The storage controller 42G controls storage of data in the storage 44 and read-out of the data therefrom.

In the first arrangement, the storage controller 42G stores the related information in the storage 44. As mentioned above, in the first arrangement, the related information is the authentication information for description, as an example. In the first arrangement, the storage controller 42G stores the authentication information in the storage 44 by registering the authentication information in the log DB 44B.

Accordingly, the storage 44 of the node 20 stores therein only the authentication information as the related information without storing the communication data. Data capacity of the storage 44 (ST 28) of the node 20 can therefore be reduced.

FIGS. 6A and 6B are schematic plan views illustrating an example of a data structure of the log DB 44B. FIG. 6A and FIG. 6B are the schematic plan views illustrating an example of the log DB 44B stored in each of the different nodes 20 (for example, the ECU 20a and the ECU 20b).

The log DB 44B is a database for storing therein the authentication information. It should be noted that the data format of the log DB 44B is not limited to the database.

In the first arrangement, the log DB 44B causes a label and the authentication information to correspond to each other. The label indicates whether the communication data to which the corresponding authentication information has been added is data received by the node 20 storing the log DB 44B or data output to another node 20 from the node 20. In the example illustrated in FIGS. 6A and 6B, the label "input" indicates that the corresponding communication data is the data received by the node 20 storing the log DB 44B. The label "output" indicates that the corresponding communication data is the data transmitted to another node 20 or the GW 10 from the node 20 storing the log DB 44B.

In the first arrangement, when the receiver 42B receives the communication data from the GW 10, the storage controller 42G registers, in the log DB 44B, the authentication information received together with the communication data while adding the label "input" thereto. When the transmitter 42C transmits the communication data to the GW 10, the storage controller 42G registers, in the log DB 44B, the authentication information transmitted together with the communication data while adding the label "output" thereto.

The authentication information is stored in the storage 44 of each of the nodes 20 in a state of being made to correspond to the label "input" indicating that the corresponding communication data has been received by the node 20 or the label "output" indicating that the corresponding communication data has been transmitted from the node 20 (see FIG. 6A and FIG. 6B).

The storage controller 42G preferably stores, in the storage 44, one of the communication data and the authentication information added to the communication data that has a smaller data size. That is to say, the storage 44 stores therein only one of the related information and the communication data that has the smaller data size. The data capacity of the storage 44 (ST 28) of each node 20 can therefore be further reduced.

To be specific, in this case, the storage controller 42G registers, in the log DB 44B, the one of the communication data and the authentication information received by the receiver 42B that has the smaller data size and the label "input" in the correspondence manner. In the same manner, the storage controller 42G registers, in the log DB 44B, the one of the communication data and the authentication information transmitted from the transmitter 42C that has the smaller data size and the label "output" in the correspondence manner.

It is sufficient that the storage controller 42G stores, in the storage 44, the authentication information when the communication data and the authentication information added to the communication data have the same data size.

The storage controller 42G is not limited to store, in the storage 44, the authentication information or the communication data while causing it to correspond to the label. That is to say, the log DB 44B may register therein only the authentication information or the one of the communication data and the authentication information that has the smaller data size without containing the label.

When the log DB 44B does not contain the label, it is sufficient that the log DB 34B of the GW 10 is formed by causing the authentication information, the communication data, and the transmission destination information of the communication data to correspond to one another.

Data that is processed without passing through the GW 10 is generated in the node 20 in some cases. The data that is processed without passing through the GW 10 is, for example, data that is directly communicated with another node 20 without passing through the GW 10, data generated by the processing by the node processor 42E, or the like.

The storage controller 42G may further store, in the log DB 44B, the data that is processed without passing through the GW 10.

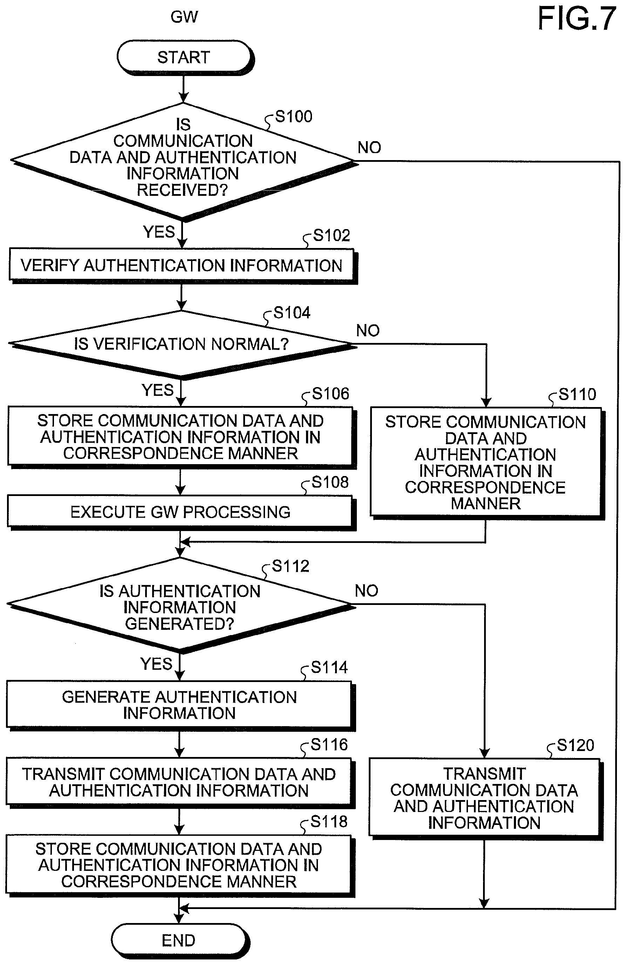

Next, an example of procedures of information processing that the GW 10 executes will be described. FIG. 7 is a flowchart illustrating an example of the procedures of the information processing that the GW 10 executes.

First, the receiver 32B of the GW 10 determines whether it has received the communication data and the authentication information from the node 20 (step S100). As described above, to be specific, the receiver 32B determines whether it has received the communication data, the authentication information, and the transmission destination information from the node 20. When the receiver 32B makes negative determination at step S100 (No at step S100), this routine is ended. On the other hand, when the receiver 32B makes positive determination at step S100 (Yes at step S100), the process proceeds to step S102.

At step S102, the verifier 32D verifies the authentication information received at step S100 (step S102). Then, the verifier 32D determines whether a verification result at step S102 indicates verification normality (step S104). When positive determination is made at step S104 (Yes at step S104), the process proceeds to step S106.

At step S106, the storage controller 32G stores, in the storage 34, the communication data and the authentication information received at step S100 in the correspondence manner (step S106).

Subsequently, the GW processor 32E executes the original GW functions of the GW 10 (step S108). Then, the process proceeds to step S112.

On the other hand, when the verification result is determined to indicate verification abnormality at step S104 (No at step S104), the process proceeds to step S110. At step S110, the storage controller 32G stores, in the storage 34, the communication data and the authentication information received at step S100 in the correspondence manner (step S110). Then, the process proceeds to step S112. It should be noted that the processing at step S110 may be omitted.

After that, the generator 32F determines whether to generate the authentication information that is added to the communication data to be transmitted to the node 20 (step S112). For example, the generator 32F makes determination at step S112 by determining whether the domains (sub networks) of the node 20 as the transmission source of the communication data received at step S100 and the node 20 as the transmission destination indicated by the transmission destination information are different from each other. The generator 32F makes determination at step S112 by determining, for example, whether the authentication information is the MAC and the node 20 as the transmission source and the node 20 as the transmission destination use the different common keys 34A.

When positive determination is made at step S112 (Yes at step S112), the process proceeds to step S114. At step S114, the generator 32F generates the authentication information that is added to the communication data to be transmitted (step S114). The communication data to be transmitted is, for example, the communication data received at step S100.

Then, the transmitter 32C transmits the communication data to be transmitted, the authentication information generated for the communication data at step S114, and the transmission destination information to the node 20 that is identified by the transmission destination information (step S116). The transmission destination information that is transmitted at step S116 is, for example, identical to the transmission destination information received at step S100.

Thereafter, the storage controller 32G stores, in the storage 34, the communication data transmitted at step S116 and the authentication information added to the communication data in the correspondence manner (step S118). Then, this routine is ended.

On the other hand, when negative determination is made at step S112 (No at step S112), the process proceeds to step S120. At step S120, the transmitter 42C transmits the communication data, the authentication information, and the transmission destination information received at step S100 to the node 20 that is identified by the transmission destination information (step S120). Then, this routine is ended.

The procedures of the information processing that the GW 10 executes are not limited to the order illustrated in FIG. 7.

For example, the GW 10 may execute at least some of the pieces of processing at the respective steps illustrated in FIG. 7 in parallel. Furthermore, the GW 10 may execute the pieces of storage processing at step S106 and S110 after the processing at step S100 and before the processing at step S102 or S104. The GW 10 may execute the transmission processing at S116 after the storage processing at step S118. The GW 10 may execute the transmission processing at S116 and the storage processing at step S118 in parallel.

The GW 10 may employ a mode in which the verification processing at step S102, the determination processing at S104, and the generation processing at step S114 are not executed. The communication data, the authentication information, and the transmission destination information that are received at step S100 and the communication data, the authentication information, and the transmission destination information that are transmitted at step S120 are the same in some cases. In this case, the GW 10 may omit the pieces of processing at step S106 and step S110 and execute the processing at step S106 or step S110 at the same timing as the processing at step S120 or before or after the processing.

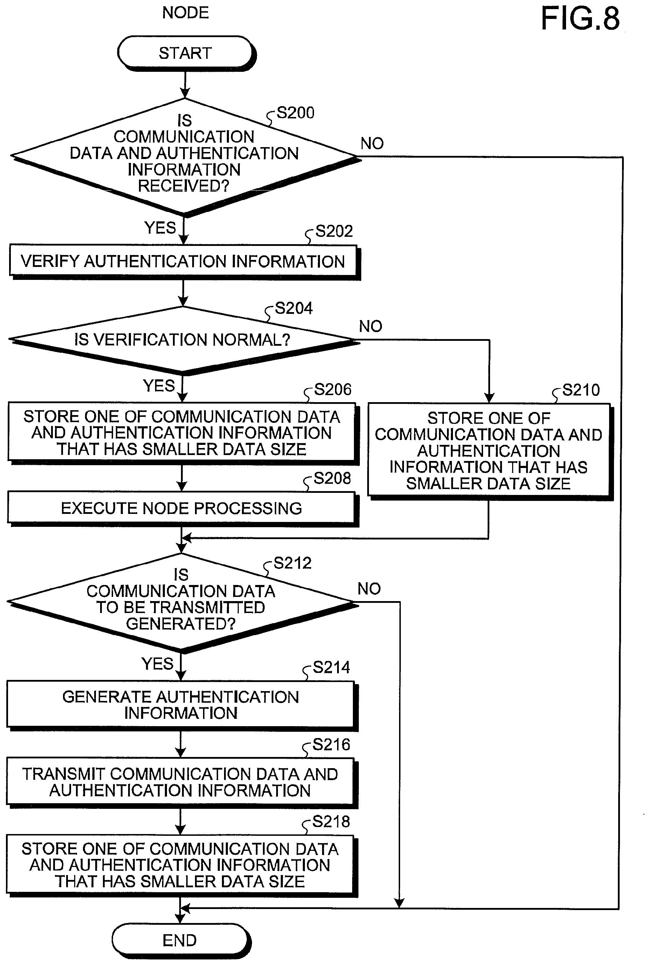

Next, an example of procedures of information processing that the node 20 executes will be described. FIG. 8 is a flowchart illustrating an example of the procedures of the information processing that the node 20 executes.

First, the receiver 42B of the node 20 determines whether it has received the communication data and the authentication information from the GW 10 (step S200). As described above, to be specific, the receiver 42B determines whether it has received the communication data, the authentication information, and the transmission destination information from the GW 10. When the receiver 42B makes negative determination at step S200 (No at step S200), this routine is ended. On the other hand, when the receiver 42B makes positive determination at step S200 (Yes at step S200), the process proceeds to step S202.

At step S202, the verifier 42D verifies the authentication information received at step S200 (step S202). Then, the verifier 42D determines whether a verification result at step S202 indicates verification normality (step S204). When positive determination is made at step S204 (Yes at step S204), the process proceeds to step S206.

At step S206, the storage controller 42G stores, in the storage 44, one of the communication data and the authentication information received at step S200 that has a smaller data size (step S206). In the first arrangement, at step S206, the storage controller 42G stores, in the storage 44, the label "input" and the one of the communication data and the authentication information that has the smaller data size in the correspondence manner (step S206).

Subsequently, the node processor 42E executes the original functions as the node 20 (step S208). Then, the process proceeds to step S212.

On the other hand, when the verification result is determined to indicate verification abnormality at step S204 (No at step S204), the process proceeds to step S210. At step S210, the storage controller 42G stores, in the storage 44, the one of the communication data and the authentication information received at step S200 that has the smaller data size (step S210). Then, the process proceeds to step S212. It should be noted that the processing at step S210 may be omitted.

After that, the generator 42F determines whether the communication data to be transmitted has been generated (step S212). When negative determination is made at step S212 (No at step S212), this routine is ended. On the other hand, when positive determination is made at step S212 (Yes at step S212), the process proceeds to step S214. At step S214, the generator 42F generates the authentication information that is added to the communication data to be transmitted (step S214). The communication data to be transmitted is, for example, data generated by the processing at step S208 by the node processor 42E.

Then, the transmitter 42C transmits the communication data to be transmitted, the authentication information generated for the communication data at step S214, and the transmission destination information to the GW 10 (step S216).

Thereafter, the storage controller 42G stores, in the storage 44, one of the communication data and the authentication information added to the communication data transmitted at step S216 that has the smaller data size (step S218). In the first arrangement, at step S218, the storage controller 42G stores, in the storage 44, the label "output" and the one of the communication data and the authentication information that has the smaller data size in the correspondence manner. Then, this routine is ended.

The procedures of the information processing that the node 20 executes are not limited to the order illustrated in FIG. 8.

For example, the node 20 may execute at least some of the pieces of processing at the respective steps illustrated in FIG. 8 in parallel. Furthermore, the node 20 may execute the pieces of storage processing at step S206 and S210 after the processing at step S200 and before the processing at step S202 or S204. The node 20 may execute the transmission processing at S216 after the storage processing at step S218. The node 20 may execute the transmission processing at S216 and the storage processing at step S218 in parallel.

As described above, the GW 10 (information processing apparatus) in the first arrangement includes the storage controller 32G. The storage controller 32G stores, in the storage 34, the communication data of the nodes 20 connected via the network N and the authentication information that is used for authentication between the nodes 20 in communication of the communication data in the correspondence manner.

In log analysis in the information processing system 1, the causal relation of the communication data between the nodes 20 and in the nodes 20 can be estimated by analyzing the authentication information corresponding to the communication data stored in the storage 34.

Accordingly, the GW 10 (information processing apparatus) in the first arrangement can provide data useful for the log analysis.

Furthermore, usage of the authentication information enables the node 20 to use the authentication information as the related information without inquiring at the GW 10 for the identification information that is used as the related information of the communication data for acquisition. Furthermore, the authentication information is commonly used by the GW 10 and the nodes 20 and is not secret information. There is a sufficiently low possibility that the same values are generated in an overlapped manner as the authentication information and the authentication information is therefore preferably used as the identification information of the communication data.

The GW 10 can therefore provide the data useful for the log analysis without making communication be complicated in addition to the above-mentioned effects.

In the information processing system 1 in the first arrangement, each of the nodes 20 includes the storage controller 42G (second storage controller). The storage controller 42G stores, in the storage 44 (second storage), the one of the communication data and the related information corresponding to the communication data that has the smaller data size.

The information processing system 1 in the first arrangement can therefore reduce the storage capacity of each node 20 in addition to the above-mentioned effects.

When the authentication information as the related information is, for example, the MAC, the MAC is 32 bytes but a value provided by truncation to about 4 to 8 bytes is used in practice. When the authentication information (MAC) is assumed to be 8 bytes, the capacity of the ST 28 (storage 44) of each node 20 can be reduced to 1/8 in comparison with the case in which the whole communication data is stored. The information processing system 1 in the first arrangement can therefore reduce the storage capacity of each node 20 in addition to the above-mentioned effects.

In the information processing system 1 in the first arrangement, the storage controller 32G of the GW 10 stores, in the storage 34, the communication data of the nodes 20 and the related information related to input and output of the communication data in the nodes 20 in the correspondence manner. Furthermore, the storage controller 42G of each node 20 stores, in the storage 44 (second storage), the one of the communication data and the related information that has the smaller data size corresponding to the communication data. Moreover, the storage controller 42G can further store, in the storage 44 (log DB 44B), the data that has been generated in the node 20 and is processed without passing through the GW 10.

The information processing system 1 in the first arrangement can therefore provide the data useful for analysis of the causal relation between the nodes 20 and in each node 20 in addition to the above-mentioned effects.

### Second Arrangement

In the first arrangement described above, the identification information or the authentication information of the communication data is used as the related information of the communication data as an example. In a second arrangement, transmission source information and transmission destination information of the communication data are used as the related information of the communication data.

In the second arrangement, the same reference numerals denote the same configurations and functional units as those in the first arrangement and detail description thereof is omitted in some cases.

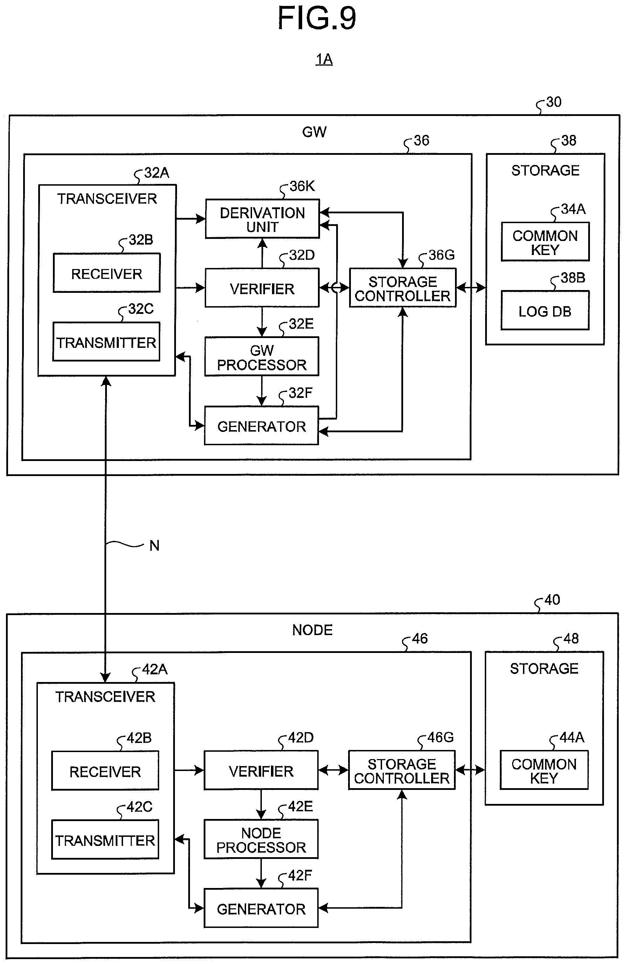

FIG. 9 is a block diagram illustrating an example of the functional configurations of a GW 30 and a node 40 included in an information processing system 1A. The information processing system 1A is mounted on, for example, the vehicle 2 (see FIG. 1).

The information processing system 1A includes the GW 30 and the nodes 40. The nodes 40 and the GW 30 are connected via the network N. The information processing system 1A is the same as the information processing system 1 in the first arrangement other than a point that it includes the GW 30 and the nodes 40 instead of the GW 10 and the nodes 20, respectively.

The GW 30 is an example of the information processing apparatus. The GW 30 executes pieces of processing, which will be described later, in addition to original functions as a gateway. The original functions as the gateway are the same as those in the first arrangement. The nodes 40 are an example of a node. The nodes 40 are electronic apparatuses communicating communication data with another node 40 through the GW 30. The nodes 40 are, for example, ECUs, various sensors, and actuators. FIG. 1 illustrates an ECU 40a, an ECU 40b, a sensor 40c, an ECU 40d, and an actuator 40e, as examples of the nodes 40. The nodes 40 execute respective pieces of processing, which will be described later, in addition to original functions as the electronic apparatus. The original functions as the electronic apparatus are the same as those in the first arrangement.

The hardware configurations of the GW 30 and the nodes 40 are the same as those of the GW 10 and the nodes 20 in the first arrangement (see FIG. 2 and FIG. 3).

FIG. 9 is a block diagram illustrating an example of the functional configuration of each of the GW 30 and the nodes 40 included in the information processing system 1A in the second arrangement. It should be noted that FIG. 9 illustrates one node 40 for simplifying explanation. The nodes 40 make communication through the GW 30 and execute pieces of processing, which will be described later, in practice.

### GW 30

First, the GW 30 is described. The GW 30 includes a controller 36 and a storage 38. The controller 36 and the storage 38 are connected to each other so as to transmit and receive pieces of data and signals.

The storage 38 stores therein various pieces of information. The storage 38 is an example of a storage and a first storage. The storage 38 is implemented by, for example, the ST 18 (see FIG. 2). In the second arrangement, the storage 38 stores therein the common key 34A and a log DB 38B (which will be described in detail later).

The controller 36 is configured by incorporating a computer system as an integrated circuit and executes various controls in accordance with a computer program (software) operating on the computer system. The controller 36 includes the transceiver 32A, the verifier 32D, the GW processor 32E, the generator 32F, and a storage controller 36G. The transceiver 32A includes the receiver 32B and the transmitter 32C. The receiver 32B is an example of a receiver.

These respective units are implemented by, for example, one or a plurality of processors. Each of the above-mentioned units may be implemented by, for example, causing the processor such as the CPU 11 to execute a computer program, that is, by software. Each of the above-mentioned units may be implemented by the processor such as an exclusive IC, that is, hardware. Each of the above-mentioned units may be implemented by the software and the hardware in combination. When the processors are used, each processor may implement one of the respective units or equal to or more than two of the respective units.

The transceiver 32A, the receiver 32B, the transmitter 32C, the verifier 32D, the GW processor 32E, and the generator 32F are the same as those in the GW 10 in the first arrangement. That is to say, the controller 36 is the same as the controller 32 of the GW 10 in the first arrangement other than a point that it includes the storage controller 36G instead of the storage controller 32G and further includes a derivation unit 36K.

The receiver 32B receives the communication data, the authentication information, and the transmission destination information from the node 40 in the same manner as the first arrangement.

The derivation unit 36K derives transmission source information of the communication data received together with the authentication information based on the authentication information received by the receiver 32B. When the GW 30 and the node 40 make communication using the controller area network (CAN), FlexRay (registered trademark), or the like, data that is communicated between the GW 30 and the node 40 does not contain the transmission source information. The derivation unit 36K therefore derives the transmission source information using the authentication information.

The derivation unit 36K derives the transmission source information using, for example, the verification result of the authentication information by the verifier 32D.

To be specific, when the verification result by the verifier 32D indicates verification normality, the derivation unit 36K derives verification identification information as the transmission source information. The verification identification information is information for identifying information used for the verification by the verifier 32D.

To be specific, when the authentication information is a message authentication code (MAC), the verification identification information is index information of the common key used for generation and verification of the MAC.

When the authentication information is a random number, the verification identification information is index information of a pseudo random number generator that has generated the random number.

When the authentication information is a count value, the verification identification information is index information of a counter that has generated the count value.

When the authentication information is a digital signature, the verification identification information is a public key certificate corresponding to a secret key used for generation of the digital signature or a public key certificate that is used for the verification.

On the other hand, when the verification result indicates verification abnormality, the derivation unit 36K derives verification abnormality information indicating the verification abnormality as the transmission source information.

When the authentication information is the MAC and all of the nodes 40 in the information processing system 1A share the same common key 44A, the derivation unit 36K may derive the verification result as the transmission source information.

The derivation unit 36K outputs the derived transmission source information to the storage controller 36G.

The storage controller 36G controls storage of data in the storage 38 and read-out of the data therefrom. The storage controller 36G is an example of a storage controller and a first storage controller.

The storage controller 36G stores, in the storage 38, the communication data of the nodes 40 connected via the network N and related information in a correspondence manner. In the second arrangement, the storage controller 36G uses the transmission destination information and the transmission source information of the communication data as the related information.

The storage controller 36G stores, in the storage 38, the communication data received by the receiver 32B, and the transmission destination information received together with the communication data and the transmission source information derived by the derivation unit 36K in a correspondence manner.

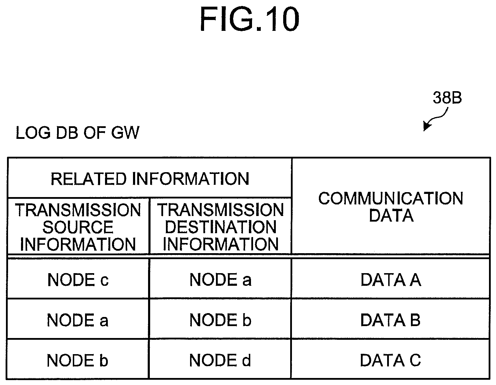

To be specific, the storage controller 36G stores, in the storage 38, the communication data and the related information in the correspondence manner by updating the log DB 38B. FIG. 10 is a schematic plan view illustrating an example of a data structure of the log DB 38B. The log DB 38B is a database in which the pieces of related information and the pieces of communication data are made to correspond to each other. The related information is formed by the transmission source information and the transmission destination information. It should be noted that the data structure of the log DB 38B is not limited to the database. For example, the data structure of the log DB 38B may be a table or the like.

Explanation is continued with reference to FIG. 9 again. The generator 32F generates the authentication information that is added to the communication data to be transmitted to the node 40 in the same manner as the first arrangement.

When the generator 32F generates the authentication information, the derivation unit 36K generates information used for the generation of the authentication information as the verification identification information and outputs it to the storage controller 36G. In this case, the storage controller 36G uses the verification identification information as the transmission source information. It is sufficient that the storage controller 36G stores, in the storage 38, the related information formed by the transmission source information and the transmission destination information of the communication data and the communication data in the correspondence manner.

### Node 40

Next, the nodes 40 are described. Each node 40 includes a controller 46 and a storage 48. The controller 46 and the storage 48 are connected to each other so as to transmit and receive pieces of data and signals.

The storage 48 stores therein various pieces of information. The storage 48 is implemented by, for example, the ST 28 (see FIG. 3). In the second arrangement, the storage 48 stores therein the common key 44A but does not store therein the log DB 44B. That is to say, in the second arrangement, the node 40 does not store the related information in the storage 48.

The controller 46 is configured by incorporating a computer system as an integrated circuit and executes various controls in accordance with a computer program (software) operating on the computer system. The controller 46 includes the transceiver 42A, the verifier 42D, the node processor 42E, the generator 42F, and a storage controller 46G. The transceiver 42A includes the receiver 42B and the transmitter 42C.

These respective units (the transceiver 42A, the receiver 42B, the transmitter 42C, the verifier 42D, the node processor 42E, the generator 42F, and the storage controller 46G) are implemented by, for example, one or a plurality of processors. Each of the above-mentioned units may be implemented by, for example, causing the processor such as the CPU 21 to execute a computer program, that is, by software. Each of the above-mentioned units may be implemented by the processor such as an exclusive IC, that is, hardware. Each of the above-mentioned units may be implemented by the software and the hardware in combination. When the processors are used, each processor may implement one of the respective units or equal to or more than two of the respective units.

The transceiver 42A, the receiver 42B, the transmitter 42C, the verifier 42D, the node processor 42E, and the generator 42F are the same as those in the node 20 in the first arrangement. In the second arrangement, the storage controller 46G is included instead of the storage controller 42G in the node 20 in the first arrangement.

The storage controller 46G is the same as the storage controller 42G in the first arrangement other than the following point. That is, the storage controller 46G does not control storage, in the storage 48, of the related information or the one of the related information and the communication data that has the smaller data size.

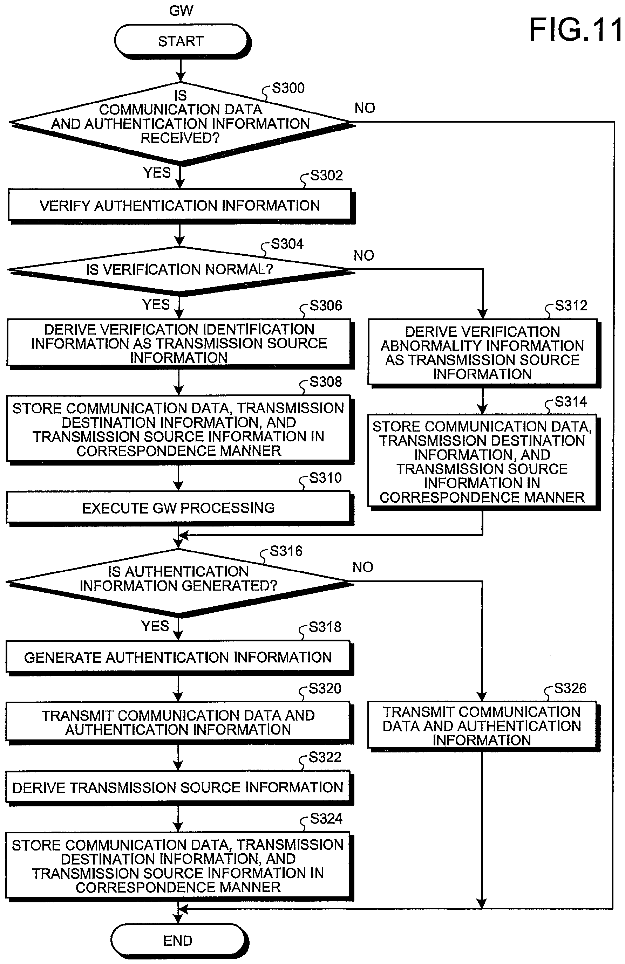

Next, an example of procedures of information processing that the GW 30 executes will be described. FIG. 11 is a flowchart illustrating an example of the procedures of the information processing that the GW 30 executes.

First, the receiver 32B of the GW 30 determines whether it has received the communication data, the authentication information, and the transmission destination information from the node 40 (step S300). When the receiver 32B makes negative determination at step S300 (No at step S300), this routine is ended. On the other hand, when the receiver 32B makes positive determination at step S300 (Yes at step S300), the process proceeds to step S302.

At step S302, the verifier 32D verifies the authentication information received at step S300 (step S302). Then, the verifier 32D determines whether a verification result at step S302 indicates verification normality (step S304). When positive determination is made at step S304 (Yes at step S304), the process proceeds to step S306.

At step S306, the derivation unit 36K derives, as the transmission source information, the verification identification information for identifying the information used for the verification at step S302 (step S306).

Thereafter, the storage controller 36G stores, in the storage 38, the communication data received at step S300 and the related information (the transmission destination information received at step S300 and the transmission source information derived at step S306) in the correspondence manner (step S308).

Subsequently, the GW processor 32E executes the original GW functions of the GW 30 (step S310). Then, the process proceeds to step S316.

On the other hand, when the verification result is determined to indicate verification abnormality at step S304 (No at step S304), the process proceeds to step S312. At step S312, the derivation unit 36K derives, as the transmission source information, the verification abnormality information indicating the verification abnormality (step S312).

Thereafter, the storage controller 36G stores, in the storage 38, the communication data received at step S300 and the related information (the transmission destination information received at step S300 and the transmission source information derived at step S312) in the correspondence manner (step S314). Then, the process proceeds to step S316.

At step S316, the generator 32F determines whether to generate the authentication information that is added to the communication data to be transmitted to the node 40 (step S316). The determination at step S316 is the same as that at step S112 in the first arrangement.

When positive determination is made at step S316 (Yes at step S316), the process proceeds to step S318. At step S318, the generator 32F generates the authentication information that is added to the communication data to be transmitted (step S318). The communication data to be transmitted is, for example, the communication data received at step S300.

Then, the transmitter 32C transmits the communication data to be transmitted, the authentication information generated for the communication data at step S318, and the transmission destination information to the node 40 that is identified by the transmission destination information (step S320). The transmission destination information that is transmitted at step S320 is, for example, identical to the transmission destination information received at step S300.

Subsequently, the derivation unit 36K derives, as the transmission source information, the verification identification information for identifying the information used for generation of the verification information at step S318 (step S322).

Thereafter, the storage controller 36G stores, in the storage 38, the communication data received at step S300 and the related information (the transmission destination information received at step S300 and the transmission source information derived at step S322) in the correspondence manner (step S324). Then, this routine is ended.

On the other hand, when negative determination is made at step S316 (No at step S316), the process proceeds to step S326. At step S326, the transmitter 32C transmits the communication data, the authentication information, and the transmission destination information received at step S300 to the node 40 that is identified by the transmission destination information (step S326). Then, this routine is ended.

The procedures of the information processing that the GW 30 executes are not limited to the order illustrated in FIG. 11.

For example, the GW 30 may execute at least some of the pieces of processing at the respective steps illustrated in FIG. 11 in parallel. The GW 30 may execute the transmission processing at S320 after the storage processing at step S324. The GW 30 may execute the transmission processing at S320 and the storage processing at step S324 in parallel.

The communication data, the authentication information, and the transmission destination information that are received at step S300 and the communication data, the authentication information, and the transmission destination information that are transmitted at step S326 are the same in some cases. In this case, the GW 30 may omit the pieces of processing at step S308 and step S314 and execute the processing at step S308 or step S314 at the same timing as the processing at step S326 or before or after the processing.

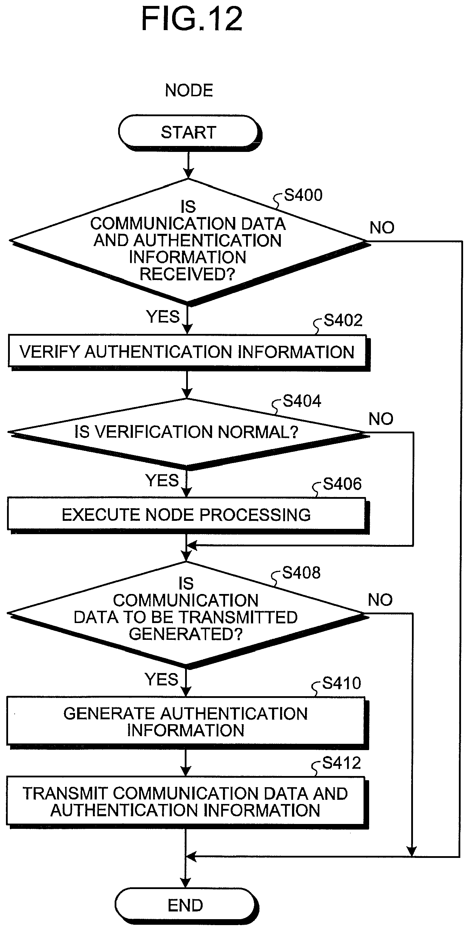

Next, an example of procedures of information processing that the node 40 executes will be described. FIG. 12 is a flowchart illustrating an example of the procedures of the information processing that the node 40 executes.

First, the receiver 42B of the node 40 determines whether it has received the communication data and the authentication information from the GW 30 (step S400). As described above, to be specific, the receiver 42B determines whether it has received the communication data, the authentication information, and the transmission destination information from the GW 30. When the receiver 42B makes negative determination at step S400 (No at step S400), this routine is ended. On the other hand, when positive determination is made at step S400 (Yes at step S400), the process proceeds to step S402.

At step S402, the verifier 42D verifies the authentication information received at step S400 (step S402). Then, the verifier 42D determines whether a verification result at step S402 indicates verification normality (step S404). When positive determination is made at step S404 (Yes at step S404), the process proceeds to step S406.

At step S406, the node processor 42E executes the original functions as the node 40 (step S406). Then, the process proceeds to step S408. Also when negative determination is made at step S404 (No at step S404), the process proceeds to step S408.

At step S408, the generator 42F determines whether the communication data to be transmitted has been generated (step S408). When negative determination is made at step S408 (No at step S408), this routine is ended. On the other hand, when positive determination is made at step S408 (Yes at step S408), the process proceeds to step S410. At step S410, the generator 42F generates the authentication information that is added to the communication data to be transmitted (step S410).

Then, the transmitter 42C transmits the communication data to be transmitted, the authentication information generated for the communication data at step S410, and the transmission destination information to the GW 30 (step S412). Then, this routine is ended.

As described above, the GW 30 (information processing apparatus) in the second arrangement uses the transmission source information and the transmission destination information of the communication data as the related information. The transmission source information and the transmission destination information of the communication data are therefore stored for each piece of communication data in the storage 38 (log DB 38B) of the GW 30. In log analysis in the information processing system 1A, the causal relation of the communication data between the nodes 40 can be estimated by analyzing the related information corresponding to the communication data stored in the storage 38 of the GW 30.

Accordingly, the GW 30 (information processing apparatus) in the second arrangement can provide data useful for the log analysis.

Furthermore, in the information processing system 1A in the second arrangement, each node 40 does not store the related information. The information processing system 1A can therefore further reduce the storage capacity of each node 40 in comparison with the first arrangement.

In the information processing system 1A in the second arrangement, the verification identification information as the transmission source information is the index information of the common key used for the generation and verification of the MAC, the index information of the pseudo random number generator that has generated the random number, the index information of the counter that has generated the count value, or the public key certificate used for the generation of the digital signature.

When the transmission source information is the index information of the common key 44A, it is assumed that a vehicle manufacturer manages the common key 44A of each node 40. It is further assumed that all of the nodes 40 and the GW 30 share the same common key 44A (the common key 44A and the common key 34A are the same key). In this case, the corresponding communication data can be analyzed to be related to the node 40 under management by the vehicle manufacturer using the common key 44A by analyzing the index information of the common key 44A as the transmission source information in the analysis.

It is assumed that the vehicle manufacturer manages the common key 44A of each node 40. It is further assumed that the same common key 44A is shared by each domain (sub network) of the information processing system 1A. In this case, the corresponding communication data can be analyzed to be related to the nodes 40 in a specific domain under management by the vehicle manufacturer using the common key 44A by analyzing the index information of the common key 44A as the transmission source information in the analysis.

It is assumed that the vehicle manufacturer manages the common key 44A of each node 40. It is further assumed that the same common key 44A is shared by each pair of the nodes 40 in the information processing system 1A. In this case, the corresponding communication data can be analyzed to be related to a specific pair of the nodes 40 under management by the vehicle manufacturer using the common key 44A by analyzing the index information of the common key 44A as the transmission source information in the analysis.

The same effects can also be provided in the case in which the MAC is used as the verification identification information.

### Supplementary Explanation

Computer programs for executing the above-mentioned respective pieces of processing that the GW 10, the nodes 20, the GW 30, and the nodes 40 execute may be stored in a hard disk drive (HDD). The computer programs for executing the above-mentioned respective pieces of processing that the GW 10, the nodes 20, the GW 30, and the nodes 40 execute in the above-mentioned arrangements may be embedded in advance and provided in the ROM 12 and the ROM 22.

The computer programs for executing the above-mentioned respective pieces of processing that the GW 10, the nodes 20, the GW 30, and the nodes 40 execute in the above-mentioned arrangements may be stored and provided, as a computer program product, in a computer-readable storage medium such as a compact disc read only memory (CD-ROM), a compact disc recordable (CD-R), a memory card, a digital versatile disc (DVD), and a flexible disk (FD) as an installable or executable file. The computer programs for executing the above-mentioned respective pieces of processing that the GW 10, the nodes 20, the GW 30, and the nodes 40 execute in the above-mentioned arrangements may be stored in a computer connected to a network such as the Internet and provided by being downloaded via the network. The computer programs for executing the above-mentioned respective pieces of processing that the GW 10, the nodes 20, the GW 30, and the nodes 40 execute in the above-mentioned arrangements may be provided or distributed via a network such as the Internet.

According to the information processing apparatus, the information processing system, and the information processing method of at least one arrangement described above, it is possible to provide data useful for log analysis.

While certain arrangements have been described, these arrangements have been presented by way of example only, and are not intended to limit the scope of the claims. Indeed, the novel apparatuses described herein may be embodied in a variety of other forms; furthermore various omissions, substitutions and changes in the form of the apparatuses described herein may be made.

Example 1. An information processing apparatus includes a storage controller. The storage controller is configured to store, in a storage, communication data of nodes connected via a network and authentication information that is used for authentication between the nodes in communication of the communication data so that the communication data and the authentication information are associated with each other.

Example 2. In the information processing apparatus according to Example 1, the authentication information is a message authentication code, a random number, a counter value, or a digital signature.

Example 3. In the information processing apparatus according to Example 1 or 2, the storage controller stores, in the storage, address information indicating a region in which the communication data and the authentication information are subsequently stored at the time of termination and stores the communication data and the authentication information in the region indicated by the address information that is read from the storage at the time of activation.

Example 4. An information processing apparatus includes a receiver, a derivation unit, and a storage controller. The receiver is configured to receive communication data of nodes connected via a network and authentication information of the communication data. The derivation unit is configured to derive transmission source information of the communication data based on the authentication information. The storage controller is configured to store, in a storage, the communication data and related information including the transmission source information and transmission destination information so that the communication data and the related information are associated with each other.

Example 5. The information processing apparatus according to Example 4 further includes a verifier configured to verify the authentication information. The derivation unit derives, as the transmission source information, verification identification information for identifying information used for verifying the authentication information when a verification result by the verifier indicates that verification is successful. The derivation unit derives, as the transmission source information, verification abnormality information when the verification result indicates that verification is unsuccessful.

Example 6. In the information processing apparatus according to Example 5, the authentication information is a message authentication code and the verification identification information is index information of a common key used for generation and verification of the message authentication code.

Example 7. In the information processing apparatus according to Example 5, the authentication information is a random number and the verification identification information is index information of a pseudo random number generator for generating the random number.

Example 8. In the information processing apparatus according to Example 5, the authentication information is a count value and the verification identification information is index information of a counter for generating the count value.

Example 9. In the information processing apparatus according to Example 5, the authentication information is a digital signature and the verification identification information is a public key certificate used for generation of the digital signature.

Example 10. In the information processing apparatus according to any one of Examples 4 to 9, the storage controller stores, in the storage, address information indicating a region in which the communication data and the authentication information are subsequently stored at the time of termination and stores the communication data and the authentication information in the region indicated by the address information that is read from the storage at the time of activation.

Example 11. In the information processing apparatus according to any one of Examples 5 to 9, the verifier stores, in the storage, information used for verifying the authentication information at the time of termination and verifies the authentication information using the information that is read from the storage at the time of activation.

Example 12. An information processing system includes a plurality of nodes; and an information processing apparatus connected to the nodes via a network. The information processing apparatus includes a storage controller configured to store, in a first storage, communication data of the nodes and authentication information that is used for authentication between the nodes in communication of the communication data so that the communication data and the authentication information are associated with each other. Each of the nodes includes a second storage controller configured to store, in a second storage, the authentication information or one of the communication data and the authentication information associated with the communication data so that the one has a smaller data size than the other.

Example 13. An information processing method includes storing, in a storage, communication data of nodes connected via a network and authentication information that is used for authentication between the nodes in communication of the communication data so that the communication data and the authentication information are associated with each other.

## Claims

1. An information processing apparatus comprising:
a storage controller(32G;36G) configured to store, in a storage, communication data of nodes connected via a network and authentication information that is used for authentication between the nodes in communication of the communication data so that the communication data and the authentication information are associated with each other.

2. The information processing apparatus according to claim 1, wherein the authentication information is a message authentication code, a random number, a counter value, or a digital signature.

3. The information processing apparatus according to claim 1 or 2, wherein the storage controller(32G;36G) stores, in the storage, address information indicating a region in which the communication data and the authentication information are subsequently stored at the time of termination and stores the communication data and the authentication information in the region indicated by the address information that is read from the storage at the time of activation.

4. An information processing apparatus comprising:
a receiver(32B) configured to receive communication data of nodes connected via a network and authentication information of the communication data;
a derivation unit(36K) configured to derive transmission source information of the communication data based on the authentication information; and
a storage controller(32G;36G) configured to store, in a storage, the communication data and related information including the transmission source information and transmission destination information so that the communication data and the related information are associated with each other.

5. The information processing apparatus according to claim 4, further comprising a verifier(32D) configured to verify the authentication information, wherein
the derivation unit(36K) derives, as the transmission source information, verification identification information for identifying information used for verifying the authentication information when a verification result by the verifier(32D) indicates that verification is successful, and
the derivation unit(36K) derives, as the transmission source information, verification abnormality information when the verification result indicates that verification is unsuccessful.

6. The information processing apparatus according to claim 5, wherein the authentication information is a message authentication code and the verification identification information is index information of a common key used for generation and verification of the message authentication code.

7. The information processing apparatus according to claim 5, wherein the authentication information is a random number and the verification identification information is index information of a pseudo random number generator for generating the random number.

8. The information processing apparatus according to claim 5, wherein the authentication information is a count value and the verification identification information is index information of a counter for generating the count value.

9. The information processing apparatus according to claim 5, wherein the authentication information is a digital signature and the verification identification information is a public key certificate used for generation of the digital signature.

10. The information processing apparatus according to any one of claims 4 to 9, wherein the storage controller(32G;36G) stores, in the storage, address information indicating a region in which the communication data and the authentication information are subsequently stored at the time of termination and stores the communication data and the authentication information in the region indicated by the address information that is read from the storage at the time of activation.

11. The information processing apparatus according to any one of claims 5 to 9, wherein the verifier(32D) stores, in the storage, information used for verifying the authentication information at the time of termination and verifies the authentication information using the information that is read from the storage at the time of activation.

12. An information processing system comprising:
a plurality of nodes; and
an information processing apparatus connected to the nodes via a network, wherein
the information processing apparatus includes a storage controller(32G;36G) configured to store, in a first storage(33;38), communication data of the nodes and authentication information that is used for authentication between the nodes in communication of the communication data so that the communication data and the authentication information are associated with each other, and
each of the nodes includes a second storage controller(42G;46G) configured to store, in a second storage(44;48), one of the communication data and the authentication information associated with the communication data that has the smaller data size.

13. An information processing method comprising storing, in a storage(34;38), communication data of nodes connected via a network and authentication information that is used for authentication between the nodes in communication of the communication data so that the communication data and the authentication information are associated with each other.
